# EUROPEAN PATENT APPLICATION

(11) **EP 1 271 821 A2**
(43) Date of publication of application: **02.01.2003**
(21) Application number: 02254493.6
(22) Date of filing: 26.06.2002
(51) Int. Cl.: H04J 3/08, H04L 12/437

(54) **Protection switching in ring-configured networks**

(30) Priority: 28.06.2001 US 894605
(71) Applicant: Nortel Networks Limited, St. Laurent, Quebec H4S 2A9 (CA)
(72) Inventor: Langridge, Dave, Stansted, Essex CM24 8JH (GB); Phelps, Peter W., Nepean, Ontario K2J 2A5 (CA); Deboer, Evert E., Nepean, Ontario K2J 4A3 (CA); Olajubu, Joseph, Canvey Island, Essex SS8 8BB (GB)
(74) Representative: Tocher, Alastair James

(57) **Abstract**

An important feature of communications networks is resilience in the event of failure. Conventional ring-configured networks use 100% bandwidth over provisioning so that in the event of failure of a fibre, a span which may be used to use the spare capacity on the same span and in the event of a total failure in a particular span of both working and protection capacity, it is possible to ring switch the data around the far side of the ring in order to provide total protection. However, 100% over provisioning of bandwidth in the network is expensive. By using up to half the protection bandwidth for working data and using span and ring switching together, it is possible to use some of the bandwidth capacity on the protection path and still retain a robust network configuration.

## Description

### Field of the Invention

This invention relates to protection switching in ring-configured networks.

### Background of the Invention

Ring networks are used, for example, in SONET and SDH networks. As this name suggests, a ring is configured so that each node in the network has at least two connections (a transmit and a receive connection) which are interconnected with other nodes. The nodes are configured so that the spans between the nodes form a ring.

In such networks, it is usual to provide "protection" for working spans carrying working data. Working data is data which has associated with it, quality of service agreements. The quality of service agreements include agreements about availability of the span. Thus in order to prevent breach of such agreements when network hardware failures occur (such as a node failure or a cut in one of the spans, typically a fibre optic cable) it is made possible to switch data to alternative spans or via alternative switches to ensure apparently continuous transmission of data.

In ring-configured networks (bidirectional line switched rings [BLSR] in SONET terminology) it is common to allocate 50% of the potential bandwidth of the network to protection bandwidth. In a two fibre BLSR, (the two fibres relating to a single fibre each for transmit and receive at each node) half of the bandwidth of each fibre is allocated for protection and half for working. In a four fibre BLSR as described below, a pair of fibres are used each for transmit and receive and a separate respective fibre in each pair is dedicated for the working span and the protection span.

Thus, conventionally in the event of failure of a single working span, a four fibre protection protocol would typically switch data from the failed span on to the protection fibre on the same span. In the event of a cut through both spans or of a node failure (in which case neither the working nor protection spans will be available in a particular span) a "ring switch" may be used in which the working data is transmitted around the protection spans of the remainder of the ring.

This type of protection provides robust and effective protection. However, it will be appreciated that this robust protection comes at a cost; namely over provisioning of the network bandwidth by 100%.

Thus, there is a desire to attempt to make use of a greater proportion of the total network bandwidth capacity.

These switching techniques are described in the ANSI specification GR1230 (for SONET) and the ITU standard G841 (for SDH). The technique is commonly referred to as shared protection rings (SPRINGS).

### Summary of the Invention

In accordance with a first aspect of the invention there is provided a communications network comprising a plurality of switching nodes, a plurality of network spans each comprising a working span and a protection span and arranged to interconnect the switching nodes in a ring configuration, a network controller arranged to control switching of data in the network between the working and protection spans, the network being arranged to carry working data on the working spans and a portion of working data on the protection spans, the portion carried on the protection span having a bandwidth less than the maximum bandwidth of the protection spans, and the network controller being arranged in the event of a failure in a working span, to cause the switches to perform a span switch by switching a portion of the working data bandwidth being carried on the working span to the unused bandwidth on the protection span for the span having the working span failure and to perform a ring switch by switching the remainder of the working data bandwidth carried on the working span to the unused bandwidth on the protection spans of the other spans in the ring, the network controller being further arranged in the event of a failure in a protection span to cause the switches to perform a ring switch to switch the portional bandwidth of the working data to the unused bandwidth on the protection spans of the other spans in the ring.

In this way, the bandwidth utilisation of the network is increased by carrying working data on the protection spans. Thus the total working bandwidth carried by the network is equal to that carried by the working spans and the additional portion carried by the protection spans.

By arranging for the use of both ring and span switching in the case of a working span failure, it is possible to fully protect the working span using the remaining capacity on the protection span (which is not already used for working data).

Similarly, the working data carried on a portion of the bandwidth of the protection spans is protected by using a ring switch in the event of failure of the protection span so that the working data carried on the failed protection span is then carried on the unused bandwidth on the other protection spans in the ring.

Preferably, the bandwidth on the protection span not used for working data before a failure in a working or protection span is at least half the maximum bandwidth of the protection span. In this way all the working data is fully protected against a single span failure.

Thus, in the case of a network constructed using fibre optics, a single fibre cut causes no loss of working data continuity.

In accordance with a second aspect of the invention there is provided a network controller for a ring-configured communications network, each span in the network having a working span and a protection span, the network controller being arranged to cause the network to carry working data on the working spans and a portion of working data on the protection spans, the portion carried on the protection span having a bandwidth less than the maximum bandwidth of the protection spans, and the controller being further arranged to control the protection switching function of at least one switching node in the network, and in the event of a failure in a working span, to cause the or each switching node to perform a span switch by switching a portion of the working data bandwidth to the unused bandwidth on the protection span for the span having the working span failure and to perform a ring switch by switching the remainder of the working data bandwidth to the unused bandwidth on the protection spans of the other spans in the ring, the network controller being further arranged in the event of a failure in a protection span to cause the or each switching node to perform a ring switch to switch the portional bandwidth of the working data to the unused bandwidth on the protection spans of the other spans in the ring.

In a third aspect, the invention provides a switching node for a ring-configured communication network, the node being arranged to permit the network to carry working data on the working spans and a portion of working data on the protection spans, the portion carried on the protection span having a bandwidth less than the maximum bandwidth of the protection spans, and the node being operable to switch data onto and between protection and working spans connected to the node, the node being further operable to perform a span switch by switching a portion of the working data bandwidth to the unused bandwidth on the protection span for the span having the working span failure and to cooperate with other switching nodes in the network to perform a ring switch by switching the remainder of the working data bandwidth to the unused bandwidth on the protection spans of the other spans in the ring.

In a method aspect, the invention provides a method of transmitting data over a communications network, the network having a plurality of switching nodes interconnected in a ring configuration, and each network span having a protection span and a working span, the method comprising transmitting working data over each working span at a bandwidth up to the maximum bandwidth of the working span, transmitting working data over each protection span at a portional bandwidth which is less than the maximum bandwidth of the protection span, in the event of a failure in a working span, performing a span switch by switching a portion of the working data bandwidth to the unused bandwidth on the protection span for the span having the working span failure and performing a ring switch by switching the remainder of the working data bandwidth to the unused bandwidth on the protection spans of the other spans in the ring, in the event of a failure in a protection span, performing a ring switch by switching the portional bandwidth of the working data to the unused bandwidth on the protection spans of the other spans in the ring.

Other aspects of the invention include software for implementing the system or for carrying out (which encompasses controlling) the method steps. This acknowledges that such software can be a valuable, separately tradable commodity. A arrangement in the form of software is intended to encompass software which runs on or controls "dumb" or standard hardware, to carry out the desired functions, (and therefore the software essentially defines the functions of the system). For similar reasons, it is also intended to encompass software (such as HDL (hardware description language) software) which "describes" or defines the configuration of hardware, as is used for designing silicon chips, or for configuring universal programmable chips, to carry out desired functions.

In particular, according to a further aspect of the present invention there is provided a program for a computer for transmitting data over a communications network, the network having a plurality of switching nodes interconnected in a ring configuration, and each network span having a protection span and a working span, the program comprising code portions for:
(a) transmitting working data over each working span at a bandwidth up to the maximum bandwidth of the working span,
(b) transmitting working data over each protection span at a portional bandwidth which is less than the maximum bandwidth of the protection span,
(c) in the event of a failure in a working span, performing a span switch by switching a portion of the working data bandwidth to the unused bandwidth on the protection span for the span having the working span failure and performing a ring switch by switching the remainder of the working data bandwidth to the unused bandwidth on the protection spans of the other spans in the ring,
(d) in the event of a failure in a protection span, performing a ring switch by switching the portional bandwidth of the working data to the unused bandwidth on the protection spans of the other spans in the ring.

Another aspect provides a method of offering or providing a data transmission service over such a network having such protection. As the advantages of the invention can enable a better network, which is more reliable or more flexible, or has greater capacity, or more cost effective for example, consequently a data transmission service over the network can show a corresponding improvement, and the value of such services can increase. Such increased value over the life of the system, could prove far greater than the sales value of the equipment.

In particular, according to a further aspect of the present invention there is provided a method of providing a data transmission service comprising the steps: receiving data for transmission; transmitting the data over a communications network.

Other aspects and features of the present invention will become apparent to those ordinarily skilled in the art upon review of the following description of specific embodiments of the invention in conjunction with the accompanying figures.

### Brief description of the drawings

Figure 1 is a schematic diagram of a ring network carrying data;
Figure 2 is a schematic diagram of a ring network in which a protection fibre has failed;
Figure 3 is a schematic diagram of a ring network in which a working fibre has failed; and

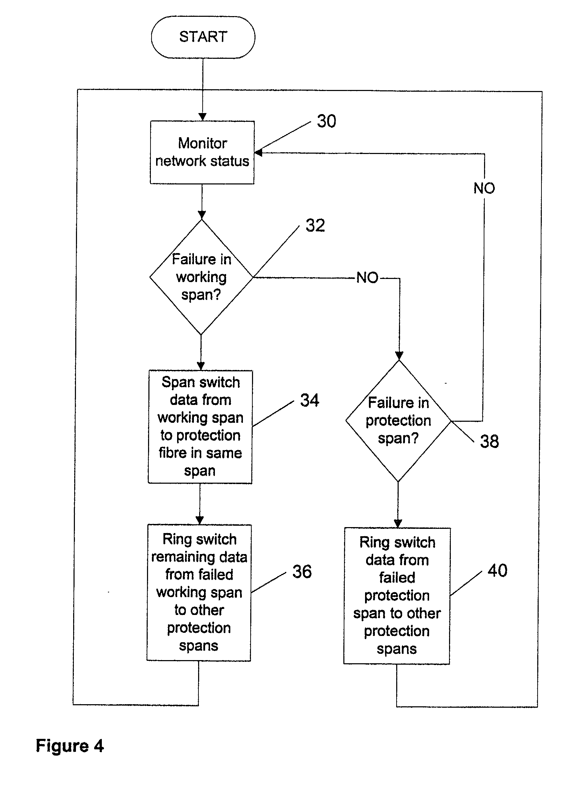

Figure 4 is a flow chart showing the operation of a network controller in accordance with the invention.

### Detailed description of the preferred embodiments

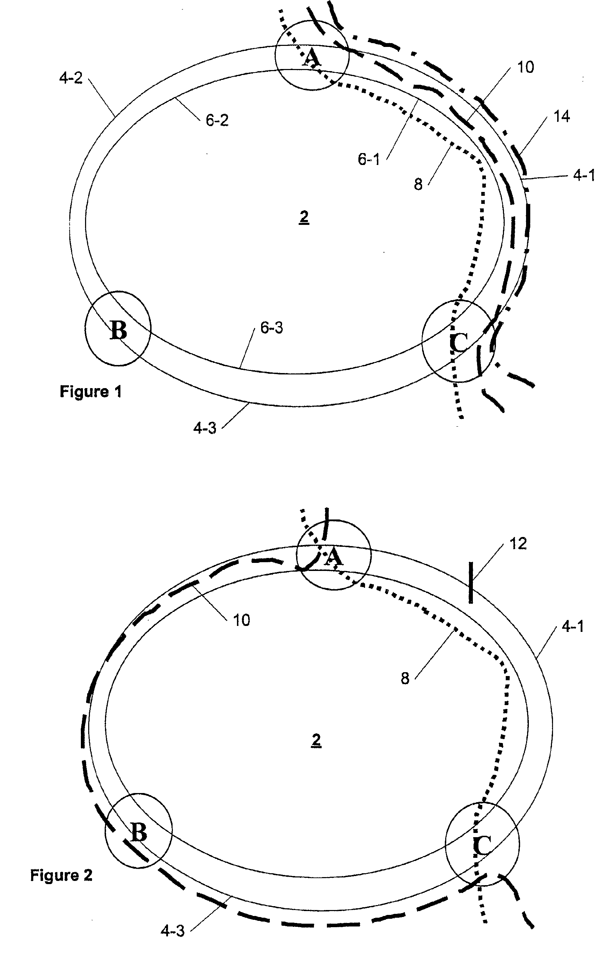

With reference to Figure 1, a ring-configured BLSR 2 has nodes A, B and C.

Each node A to C has four fibres connected to it. The fibres are arranged in pairs of protection fibres 4-1, 4-2, 4-3 and working fibres 6-1, 6-2, 6-3. Thus each node A, B, C has four fibres connected to it.

For the sake of this example, we will assume that each fibre has a maximum bandwidth capacity of 10 Gbit/s. It will be appreciated that maximum bandwidths at other levels are equally applicable to this invention.

Thus, the working fibres 6-1, 6-2, 6-3 each carry up to ten Gbit/s of data. Thus in this example, 10 Gbit/s of data is being carried between nodes A and C as designated by the dotted line 8 in Figure 1. In addition to this, the protection fibre 4-1 also carries 5 Gbit/s of data (as designated by the dashed line 10). The additional 5 Gbit/s of data 10 is considered working data since in the scenario described below it is fully protected and offers the same quality of service as the 10 Gbit/s connection over the working fibre. In addition, so called "extra traffic" (ET) 9 may also be carried on the spare 5 Gbit/s capacity on the protection fibre 4-1. However, no guarantees are provided in connection with this extra traffic concerning protection. ET may be implemented in conjunction with the following invention in the usual way and thus a detailed description of ET is not provided herein.

With reference to Figure 2, in the event of a protection fibre cut 12, it is necessary to re-route the 5 Gbit/s of data 10 being carried on the protection fibre 4-1. This is achieved by implementing a ring switch to use the spare 5 Gbit/s capacity on the protection fibres 4-2 and 4-3 on the far side of the ring.

In this scenario, the ET 9 is dropped.

Thus it will be seen that following the protection span failure caused by the cut 12, it has been possible to protect the additional 5 Gbit/s of capacity 10 being carried by the protection span. Thus, even though one of the fibres in the ring has failed, it is still possible to carry the full 15 Gbit/s of working data. In the standard protection configuration, it will be noted that only 10 Gbit/s of working data is carried.

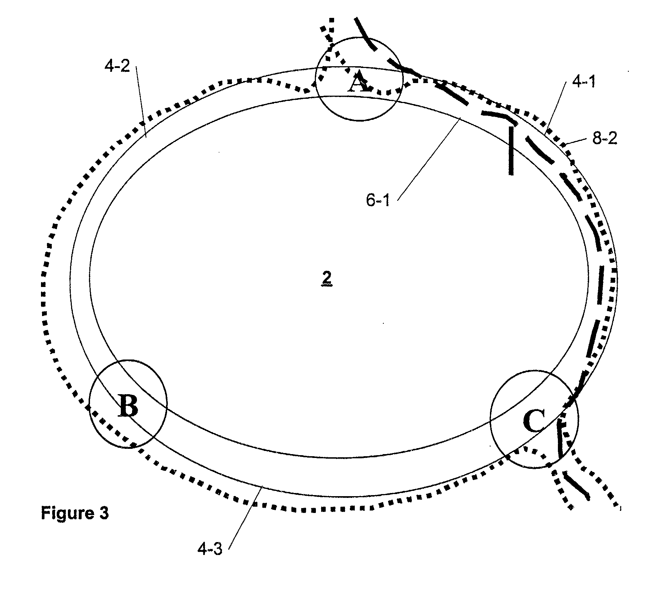

With reference to Figure 3, in the alternative scenario in which the working fibre 6-1 fails, a span switch is carried out between nodes A and C to allow 5 Gbit/s 8-2 of the working data formerly carried on working fibre 6-1 to be carried on the unused capacity in the protection fibre 4-1.

Additionally, a ring switch is carried out to allow the remaining 5 Gbit/s 8-2 of data which was carried on the working fibre 6-1 to be carried around the far side of the ring using the unused capacity on the protection fibres 4-2 and 4-3.

Thus as in the previous example, following a failure of a single fibre in the ring, it has been possible to protect not only the 10 Gbit/s of data being carried over the working spans but also the additional 5 Gbit/s of data being carried over the protection spans.

It is possible to implement switching using a network controller (which may be a generally centralised controller located remotely from the switching nodes or distributed as an integral part of the switching nodes A, B, C) and to use the well known automatic switching protocol (APS). Control signals may be passed around the network to the switching nodes to cause switching to occur using overhead bytes in the SONET or SDH frame). For example in SONET, the K1 and K2 overhead bytes may be used by this signalling. Similarly, the techniques used for conventional BLSR rings to enable rapid switching of the order of tens of milliseconds (in order to ensure data continuity) may be implemented in this invention.

The fundamental modifications to existing switching node designs are to allow the nodes to switch half the bandwidth being carried by the node in the event of a network failure and to recognise the control signals in the data overload. It will be appreciated that out of band signalling may also or instead be used.

With reference to Figure 3, a network controller (wherever in the network it is implemented) receives data about the network status (step 30). The data may be provided for example by the nodes A, B, C themselves or by other nodes in the network monitoring network failure. In step 32 the controller determines whether a working span has failed. If a working span has failed then a span switch occurs (step 34) to switch data from the working span to the protection fibre in the same span. Additionally (step 36) a ring switch is carried out to switch the remaining data (because the protection fibre does not have sufficient capacity to carry the data of the whole working fibre because it is already carrying an additional quantity of working data) so that the additional working data is carried around the far side of the ring over the remaining capacity on the other protection spans.

Alternatively, if there is no failure in the working span then the controller determines whether there is a failure in the protection span (step 38). If the protection span has failed then the additional working data carried on that protection span is ring switched around the far side of the ring using the spare capacity on the protection spans between the other nodes.

## Claims

1. A communications network comprising:-
(a) a plurality of switching nodes,
(b) a plurality of network spans each comprising a working span and a protection span and arranged to interconnect the switching nodes in a ring configuration,
(c) a network controller arranged to control switching of data in the network between the working and protection spans,
the network being arranged to carry working data on the working spans and a portion of working data on the protection spans, the portion carried on the protection span having a bandwidth less than the maximum bandwidth of the protection spans, and the network controller being arranged in the event of a failure in a working span, to cause the switches to perform a span switch by switching a portion of the working data bandwidth being carried on the working span to the unused bandwidth on the protection span for the span having the working span failure and to perform a ring switch by switching the remainder of the working data bandwidth carried on the working span to the unused bandwidth on the protection spans of the other spans in the ring, the network controller being further arranged in the event of a failure in a protection span to cause the switches to perform a ring switch to switch the portional bandwidth of the working data to the unused bandwidth on the protection spans of the other spans in the ring.

2. A network according to claim 1, wherein the network controller is integral with at least one of the switching nodes.

3. A network according to any one of claims 1-2, wherein the spans are carried over optical fibres.

4. A network according to any one of claims 1-3, wherein the data is transmitted over the network using a protocol selected from a group containing SONET and SDH.

5. A network according to any one of claims 1-4, wherein the bandwidth on the protection spans not used for working data before a failure in a working span is at least half the maximum bandwidth of the protection spans.

6. A network according to any one of claims 1-5, wherein the bandwidth on the protection spans not used for working data before a failure in a protection span is at least half the maximum bandwidth of the protection spans.

7. A network controller for a ring-configured communications network, each span in the network having a working span and a protection span, the network controller being arranged to cause the network to carry working data on the working spans and a portion of working data on the protection spans, the portion carried on the protection span having a bandwidth less than the maximum bandwidth of the protection spans, and the controller being further arranged to control the protection switching function of at least one switching node in the network, and in the event of a failure in a working span, to cause the or each switching node to perform a span switch by switching a portion of the working data bandwidth to the unused bandwidth on the protection span for the span having the working span failure and to perform a ring switch by switching the remainder of the working data bandwidth to the unused bandwidth on the protection spans of the other spans in the ring, the network controller being further arranged in the event of a failure in a protection span to cause the or each switching node to perform a ring switch to switch the portional bandwidth of the working data to the unused bandwidth on the protection spans of the other spans in the ring.

8. A network controller according to claim 7, wherein the network controller forms an integral of at least one switching node in the network.

9. A network controller according to any one of claims 7-8, wherein the bandwidth on the protection spans not used for working data before a failure in a working span is at least half the maximum bandwidth of the protection spans.

10. A network controller according to any one of claims 7-9, wherein the bandwidth on the protection spans not used for working data before a failure in a protection span is at least half the maximum bandwidth of the protection spans.

11. A switching node for a ring-configured communication network, the node being arranged to permit the network to carry working data on the working spans and a portion of working data on the protection spans, the portion carried on the protection span having a bandwidth less than the maximum bandwidth of the protection spans, and the node being operable to switch data onto and between protection and working spans connected to the node, the node being further operable to perform a span switch by switching a portion of the working data bandwidth to the unused bandwidth on the protection span for the span having the working span failure and to cooperate with other switching nodes in the network to perform a ring switch by switching the remainder of the working data bandwidth to the unused bandwidth on the protection spans of the other spans in the ring.

12. A node according to claim 11, wherein the bandwidth on the protection spans not used for working data before a failure in a working span is at least half the maximum bandwidth of the protection spans.

13. A node according to any one of claims 11-12, wherein the bandwidth on the protection spans not used for working data before a failure in a protection span is at least half the maximum bandwidth of the protection spans.

14. A method of transmitting data over a communications network, the network having a plurality of switching nodes interconnected in a ring configuration, and each network span having a protection span and a working span, the method comprising:-
(a) transmitting working data over each working span at a bandwidth up to the maximum bandwidth of the working span,
(b) transmitting working data over each protection span at a portional bandwidth which is less than the maximum bandwidth of the protection span,
(c) in the event of a failure in a working span, performing a span switch by switching a portion of the working data bandwidth to the unused bandwidth on the protection span for the span having the working span failure and performing a ring switch by switching the remainder of the working data bandwidth to the unused bandwidth on the protection spans of the other spans in the ring,
(d) in the event of a failure in a protection span, performing a ring switch by switching the portional bandwidth of the working data to the unused bandwidth on the protection spans of the other spans in the ring.

15. A method according to claim 14, wherein the bandwidth on the protection spans not used for working data before a failure in a working span is at least half the maximum bandwidth of the protection spans.

16. A method according to any one of claims 14-15, wherein the bandwidth on the protection spans not used for working data before a failure in a protection span is at least half the maximum bandwidth of the protection spans.

17. A program for a computer for transmitting data over a communications network, the network having a plurality of switching nodes interconnected in a ring configuration, and each network span having a protection span and a working span, the program comprising code portions for:
(a) transmitting working data over each working span at a bandwidth up to the maximum bandwidth of the working span,
(b) transmitting working data over each protection span at a portional bandwidth which is less than the maximum bandwidth of the protection span,
(c) in the event of a failure in a working span, performing a span switch by switching a portion of the working data bandwidth to the unused bandwidth on the protection span for the span having the working span failure and performing a ring switch by switching the remainder of the working data bandwidth to the unused bandwidth on the protection spans of the other spans in the ring,
(d) in the event of a failure in a protection span, performing a ring switch by switching the portional bandwidth of the working data to the unused bandwidth on the protection spans of the other spans in the ring.

18. A method of providing a data transmission service comprising the steps:
receiving data for transmission;
transmitting the data over a communications network according to claim 14.
